# EUROPEAN PATENT APPLICATION

(11) **EP 4 412 318 A1**
(43) Date of publication of application: **07.08.2024**
(21) Application number: 23216662.9
(22) Date of filing: 14.12.2023
(51) Int. Cl.: H04W 52/02

(54) **POWER SAVING IN WIRELESS COMMUNICATION NETWORKS**

(30) Priority: 31.01.2023 FI 20235085
(71) Applicant: Nokia Technologies Oy, 02610 Espoo (FI)
(72) Inventor: KOSKINEN, Jussi-Pekka, Oulu (FI); TURTINEN, Samuli Heikki, Ii (FI)
(74) Representative: Nokia EPO representatives

(57) **Abstract**

According to an example aspect of the present invention, there is provided an apparatus comprising a terminal device, comprising at least one processor and at least one memory comprising a computer program code, wherein the at least one memory and the computer program code are configured to, with the at least one processor, cause the terminal device to obtain, via a first radio entity in the terminal device, a configuration for a wake-up signal from a wireless network node, monitor, via a second radio entity in the terminal device, the wake-up signal from the wireless network node based at least on the configuration, wherein the first and second radio entities are different and activate the first radio entity based on an indication from the second radio entity.

## Description

### FIELD

Various example embodiments relate in general to wireless communication networks and more specifically, to device power saving in such networks.

### BACKGROUND

Terminal devices of wireless communication networks typically have limited power. Hence, saving power of terminal devices is important in various wireless communication networks, such as, in cellular networks operating according to Long Term Evolution, LTE, and/or 5G radio access technology. In addition, saving power of terminal devices is also important in non-cellular networks, like Wireless Local Area Networks, WLANs. In general, there is a need to enhance power saving of terminal devices of wireless communication networks.

### SUMMARY

According to some aspects, there is provided the subject-matter of the independent claims. Some example embodiments are defined in the dependent claims.

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to a first aspect of the present invention, there is provided a terminal device comprising at least one processing core, at least one memory including computer program code, the at least one memory and the computer program code being configured to, with the at least one processing core, cause the terminal device at least to obtain, via a first radio entity in the terminal device, a configuration for a wake-up signal from a wireless network node, monitor, via a second radio entity in the terminal device, the wake-up signal from the wireless network node based at least on the configuration, wherein the first and second radio entities are different and activate the first radio entity based on an indication from the second radio entity.

Example embodiments of the first aspect may comprise at least one feature from the following bulleted list or any combination of the following features:
- wherein the first radio entity is a main radio of the terminal device for communicating with the wireless network node and the second radio entity is a radio receiver for receiving the wake-up signal from the wireless network node;
- wherein the at least one memory and the computer program code are further configured to, with the at least one processing core, cause the terminal device at least to monitor, by the first radio entity, a downlink control channel from the wireless network node based on the indication;
- wherein the at least one memory and the computer program code are further configured to, with the at least one processing core, cause the terminal device at least to transit the first radio entity to a non-power-saving state based on the indication;
- wherein the at least one memory and the computer program code are further configured to, with the at least one processing core, cause the terminal device at least to turn on or off the first radio entity based on the indication;
- wherein the at least one memory and the computer program code are further configured to, with the at least one processing core, cause the terminal device at least to acquire, by the first radio entity, the indication from the second radio entity;
- wherein the indication is based on the wake-up signal monitored at the second radio entity;
- wherein the at least one memory and the computer program code are further configured to, with the at least one processing core, cause the terminal device at least to provide, by the first radio entity to the second radio entity, information indicating when the second radio entity is to inform the first radio entity about the wake-up signal received at the second radio entity;
- wherein the information indicates when the wake-up signal is addressing the terminal device;
- wherein the information comprises an identification of the terminal device or an identification of a group which the terminal device is associated with;
- wherein the information comprises information about an occasion indicating the wake-up signal to be received at the second radio entity;
- wherein the occasion is preceded or associated with a paging occasion of the terminal device;
- wherein the at least one memory and the computer program code are further configured to, with the at least one processing core, cause the terminal device at least to activate the first radio entity when the terminal device determines at least one of: a signal strength or quality of the wake-up signal is below a threshold, a rate of wake-up signal reception is below a threshold, the wake-up signal is not received after a certain number of occasions, the wake-up signal is not received for a certain amount of time, the terminal device performs handover, or the terminal device receives an indication indicating that the network does not support wake-up signalling;
- wherein the at least one memory and the computer program code are further configured to, with the at least one processing core, cause the terminal device at least to communicate, between the first radio entity and the second radio entity, via at least one of physical, medium access control or radio resource control layer of the terminal device or the first radio entity;
- wherein the at least one memory and the computer program code are further configured to, with the at least one processing core, cause the terminal device at least to communicate, between the first radio entity and the second radio entity, via at least one of physical, medium access control or radio resource control layer of the first radio entity without specifying layer information on the second radio entity;
- wherein the communication is performed when the terminal device is in one of IDLE mode, INACTIVE mode, or CONNECTED mode.

According to a second aspect of the present invention, there is provided a method, comprising obtaining by a terminal device, via a first radio entity in the terminal device, a configuration for a wake-up signal from a wireless network node, monitoring by the terminal device, via a second radio entity in the terminal device, the wake-up signal from the wireless network node based at least on the configuration, wherein the first and second radio entities are different, and activating by the apparatus the first radio entity based on an indication from the second radio entity

According to a third aspect of the present invention, there is provided a terminal device, comprising means for means for obtaining by a terminal device, via a first radio entity in the terminal device, a configuration for a wake-up signal from a wireless network node, means for monitoring by the terminal device, via a second radio entity in the terminal device, the wake-up signal from the wireless network node based at least on the configuration, wherein the first and second radio entities are different, and means for activating by the apparatus the first radio entity based on an indication from the second radio entity

According to a fourth aspect of the present invention, there is provided a non-transitory computer readable medium having stored thereon a set of computer readable instructions that, when executed by at least one processor, cause an apparatus to at least perform the method. According to a fifth aspect of the present invention, there is provided a computer program comprising instructions which, when the program is executed by an apparatus, cause the apparatus to carry out the method.

### BRIEF DESCRIPTION OF THE DRAWINGS

FIG. 1 illustrates an example of a network scenario in accordance with at least some example embodiments;
FIG. 2 illustrates an example arrangement in accordance with at least some example embodiments;
FIG. 3 illustrates an example wireless receiver in accordance with at least some example embodiments;
FIG. 4 illustrates a signalling graph in accordance with at least some example embodiments;
FIG. 5 illustrates an example apparatus capable of supporting at least some example embodiments;
FIG. 6 illustrates a flow graph of a method in accordance with at least some example embodiments.

### EXAMPLE EMBODIMENTS

Embodiments of the present disclosure provide improvements for saving power in cellular communication networks. More specifically, embodiments of the present disclosure enable power savings for a terminal device comprising a first radio entity, like a main radio, and a second radio entity, like a Wake Up Receiver, WUR. The second radio entity may exploited to keep the first radio entity in a power-saving state, like a deep sleep or OFF state, as long as possible, because the second radio entity may wake up the first radio entity when needed. In some example embodiments, the second radio entity may control the first radio entity such that the first radio entity does not need to wake up unnecessarily, as waking up unnecessarily would increase power consumption of the terminal device.

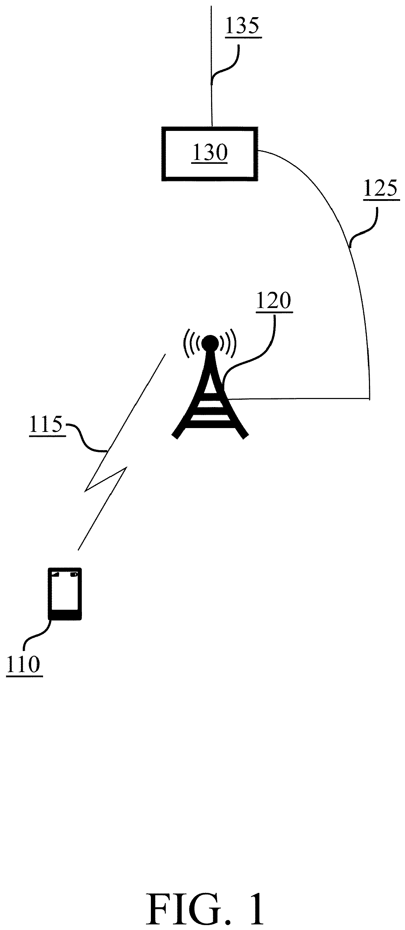

FIG. 1 illustrates an example of a network scenario in accordance with at least some example embodiments. According to the example scenario of FIG. 1, there may be a communication system, which comprises terminal device 110, wireless network node 120 and core network element 130. Terminal device 110 may be a wireless terminal device, like a User Equipment, UE. Terminal device 110 may comprise, or be incorporated into, for example a smartphone, a cellular phone, a Machine-to-Machine, M2M, node, Machine-Type Communications, MTC, node, an Internet of Things, IoT, node, a car telemetry unit, a laptop computer, a tablet computer or, indeed, any kind of suitable wireless terminal, station or a relay.

In the example network scenario of FIG. 1, terminal device 110 may communicate wirelessly with wireless network node 120 via air interface 115. Air interface 115 may be a beam-based interface. That is, terminal device 110 and wireless network node 120 may communicate using one or more beams.

Air interface 115 between terminal device 110 and wireless network node 120 may be configured in accordance with a Radio Access Technology, RAT, which both terminal device 110 and wireless network node 120 are configured to support. Examples of cellular RATs include Long Term Evolution, LTE, New Radio, NR, which may also be known as fifth generation, 5G, radio access technology and MulteFire. On the other hand, examples of non-cellular RATs comprise Wireless Local Area Network, WLAN, and Worldwide Interoperability for Microwave Access, WiMAX.

For example in the context of LTE, wireless network node 120 may be referred to as eNB while wireless network node 120 may be referred to as gNB in the context of NR. In some example embodiments, wireless network node 120 may be referred to as a Transmission and Reception Point, TRP, or control multiple TRPs that may be co-located or non-co-located. In case of non-cellular RATs, wireless network node 120 may be referred to as an access point. In some example embodiments, wireless network node 120 may refer to a relay.

In any case, example embodiments of the present disclosure are not restricted to any particular wireless technology. Instead, example embodiments may be exploited in any wireless communication system, wherein Wake-Up Signals, WUSs, and WURs are used. In general, a wake-up signal may refer to the WUS, a WUS beacon or a WUS synchronization signal. That is, even though the WUS is used as an example in various example embodiments, the example embodiments of the present disclosure may be applied similarly for any wake-up signal, like the WUS beacon or the WUS synchronization signal.

For instance, example embodiments may be exploited in 5G/NR networks standardized by 3rd Generation Partnership Project, 3GPP, and/or in WLANs, like networks operating at least partly according to Institute of Electrical and Electronics Engineers, IEEE, 802.11ba -standard. That is, terminal device 110 and wireless network node 120 may be configured to operate according to at least one standard specification specified by the 3GPP and/or IEEE.

Wireless network node 120 may be connected, directly or via at least one intermediate node, with core network 130 via interface 125. Core network 130 may be, in turn, coupled via interface 135 with another network (not shown in FIG. 1), via which connectivity to further networks may be obtained, for example via a worldwide interconnection network. Wireless network node 120 may be connected, directly or via at least one intermediate node, with core network 130 or with another core network.

In some example embodiments, the network scenario may comprise a relay node instead of, or in addition to, terminal device 110 and/or wireless network node 120. Relaying may be used for example when operating on millimeter-wave frequencies. One example of the relay node may be an Integrated Access and Backhaul, IAB, node. The IAB node may be referred to as a self-backhauling relay as well. Another example of a relay may be an out-band relay. In general, the relay node may comprise two parts:
1) Distributed Unit, DU, part which may facilitate functionalities of wireless network node 120, such as a gNB. Thus, in some example embodiments, the DU part of a relay may be referred to as wireless network node 120 and the DU may perform tasks of wireless network node 120;
2) Mobile Termination, MT, part which may facilitate functionalities of terminal device 110, i.e., a backhaul link which may be the communication link between a parent node (DU), such as a DU part of wireless network node 120, and the relay, such as an IAB node. In some example embodiments, the MT part may be referred to as terminal device 110 and perform tasks of terminal device 110.

In some example embodiments, power saving of terminal device 110 may be enhanced. For example, power saving of 5G NR UE may be enhanced through the use of a low-power WUR and WUS. WURs and WUSs may be exploited to further reduce power consumption of terminal device 110 as well as to reduce the latency while keeping power consumption of terminal device 110 similar to what may be achieved with, e.g., extended Discontinous Reception, eDRX. Reduction of power consumption of terminal device 110 may be enhanced by combining the use of a low-power WUR with periodic monitoring while reduced latency may be achieved by using the low-power WUR with continuous or more frequent wake-up monitoring than with eDRX (for the same UE power consumption).

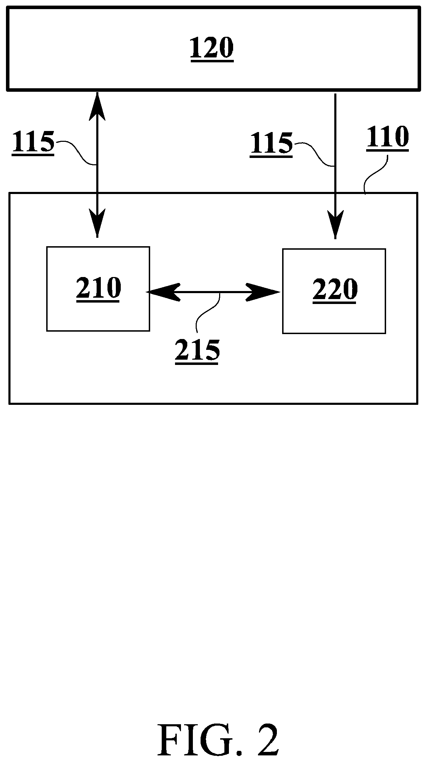

FIG. 2 illustrates an example arrangement in accordance with at least some example embodiments. In the example arrangement of FIG.2, terminal device 110, air interface 115 and wireless network node 120 of FIG. 1 are illustrated. In addition, terminal device 110 may comprise first radio entity 210, interface 215 and second radio entity 220. Interface 215 may be a link a between first radio entity 210 and second radio entity 220 within terminal device 110. For instance, first radio entity 210 and second radio entity 220 may be interconnected by electrical leads internal to terminal device 110. First radio entity 210 and second radio entity 220 may hence interact, i.e., communicate, via interface 215. Communication may comprise receiving and transmitting.

First radio entity 210 may be a radio transceiver while second radio entity 220 may be a radio receiver. That is, first radio entity 210 may communicate with wireless network node 120 wirelessly over air interface 115 but second radio entity 220 may only receive from wireless network node 120 wirelessly over air interface 115, not transmit to wireless network node 120.

For instance, first radio entity may be an NR transceiver of a UE while second radio entity 220 may be an NR receiver, without having a capability to transmit. In some example embodiments, first radio entity 210 may be a main radio of terminal device 110 while second radio entity 220 may be a WUR. First radio entity 210 may be the main radio of terminal device 110 and configured for communication between terminal device 110 and wireless network node 120. Second radio entity 220 may be a radio receiver configured for receiving a WUS from wireless network node 120. First radio entity 210 may be different than second radio entity 220. That is, first radio entity 210 may be separate from second radio entity 220 within terminal device 110. First radio entity 210 and second radio entity 220 may be independent radios.

First radio entity 210 may be in a power-saving state, like a deep sleep or a OFF state while second radio entity 220 may perform monitoring and be configured to turn on first radio entity 210 when second radio entity receives a WUS from wireless network node 120. Second radio entity 220 may monitor the WUS. For example, second radio entity 220 may monitor a wireless channel, like a downlink control channel, such as a Physical Downlink Control Channel, PDCCH, paging Downlink Control Information, DCI, or WUS/PEI for the WUS. Second radio entity 220 may further determine whether to activate first radio entity 210 based on information received from first radio entity 210. Said information may indicate when second radio entity 220 shall inform first radio entity about the received WUS. Hence, second radio entity 220 may activate first radio entity 210 by transmitting an indication to first radio entity 210 if second radio entity 220 determines, based on said information, that first radio entity needs to be activated responsive to receiving the WUS. However, if second radio entity 220 determines, based on said information, that first radio entity should not be activated responsive to receiving the WUS, second radio entity 220 may refrain from transmitting the indication to wake up first radio entity 210. Therefore, second radio entity 220 may control the activation of first radio entity 210 to avoid unnecessary wake ups.

Turning on first radio entity 210 enables paging monitoring and/or system information change monitoring and/or cell reselection evaluation and/or starting communications with wireless network node 120. Interface 215 may be exploited to transmit the information from first radio entity 210 to second radio entity 220, to enable activating first radio entity 210 when needed with proper configuration from first radio entity 210. First radio entity 210 and second radio entity 220 may use the same processor, or different processors. Second radio entity 220 may not use any processor.

Second radio entity 220 may have significantly lower power consumption than first radio entity 210, like a regular NR receiver, to obtain power saving with second radio entity 220. Power saving may be achieved for example with a simple receiver structure designed solely for monitoring and detecting of WUSs.

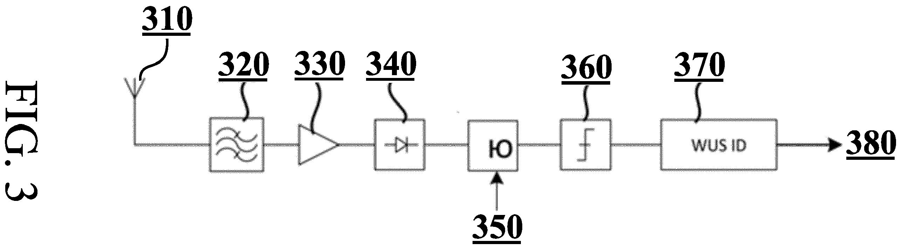

FIG. 3 illustrates an example wireless receiver in accordance with at least some example embodiments. The example wireless receiver illustrated in FIG. 3 may be second radio entity 220 of FIG. 2. The example wireless receiver may be suitable for receiving a WUS from wireless network node 120. A signal, such as a signal based on using On-Off Keying, OOK, may be provided from receive antenna 310 to band-pass filter 320 and from band-pass filter 320 further to low-noise amplifier 330. From low-noise amplifier 330 the signal may be provided to envelope detector 340 and from envelope detector 340 further to integrator 350. Integrator 350 may be configured to reset at a symbol time interval. Integrator 350 may provide its output to comparator 360. Comparator 360 may in turn provide its output to correlator 370.

Correlator 370 may detect whether a specific WUS, like a WUS addressing terminal device 110, has been detected. If the WUS is detected and terminal device 110 is configured to respond to the detected, specific WUS, then signal 380 may be provided to switch on a wireless transceiver, like first radio entity 210 illustrated in FIG. 2, which may be the main radio of terminal device 110.

In some example embodiments, after envelope detector 340 the signal may be a low frequency signal being either low, when a 0 is received, or high, when a 1 is received. By integrating the signal over each symbol duration, the signal noise may be suppressed and comparator 360 may then determine if the received symbol is a 0 or 1 by comparing the received symbol with an average signal level. In correlator 370 the detected bit sequence may be correlated with the expected signal.

Furthermore, in some example embodiments, waking up of first radio entity 210 illustrated in FIG. 2 may be avoided by reducing waking ups initiated by second radio entity 220. For instance, first radio entity 210 illustrated in FIG. 2 may control when second radio entity 220 shall inform first radio entity 210 about a received WUS, by transmitting information indicating when second radio entity 220 shall inform first radio entity 210 about the received WUS. Terminal device 110 may obtain, via first radio entity 210 in terminal device 110, a configuration for receiving a WUS from wireless network node 120. That is, terminal device 110 may receive the configuration from wireless network node 120 using first radio entity 210. Terminal device 110 may then monitor, via second radio entity 220 in terminal device 110, the WUS from wireless network node 120 based on the configuration and transmit an indication to first radio entity 210, if needed based on said information. In such a case, terminal device 110 may activate first radio entity 210 based on the indication received from second radio entity.

In some example embodiments, terminal device 110 may monitor, by first radio entity 210, a downlink control channel from wireless network node 120 based on the indication. That is, terminal device 110 may start monitoring the downlink control channel from wireless network node 120 responsive to receiving the indication from second radio entity 220, by first radio entity 210. The downlink control channel may be a PDCCH for example.

In some example embodiments, terminal device 110 may transit first radio entity 210 to a non-power-saving state based on the indication. That is, terminal device 110 may transit first radio entity 210 to a power-saving state responsive to receiving the indication from second radio entity 220. The non-power-saving state may refer to an "ON" -state. In the non-power-saving state, first radio entity 210 may be on and for example perform paging monitoring and cell reselection evaluation. The power-saving state of first radio entity 210 may be referred to as, e.g., an OFF state or deep sleep state. In some example embodiments, terminal device 110 may turn on or off first radio entity 210 based on the indication, e.g., responsive to receiving the indication from second radio entity 220, by first radio entity 210.

In some example embodiments, terminal device 110 may acquire, by first radio entity 210, the indication from second radio entity 220. Acquiring may refer to some hardware and software implementation in terminal device 110, some communication links between first radio entity 210 and second radio entity 220 or how information is transmitted, e.g., bit streams sent directly through link, or through processor, stored in memory, retrieved by first radio entity 210 or second radio entity 220, etc. For instance, second radio entity 220 may receive the indication from first radio entity 210 via interface 215.

In some example embodiments, the indication may be based on the WUS monitored at second radio entity 220. That is, second radio entity 220 may transmit the indication responsive to receiving the WUS from wireless network node 120. The indication may be realized as a certain bit stream, flag, bit field, etc.

In some example embodiments, second radio entity 220 may be provided with information indicating when second radio entity 220 shall inform first radio entity 210 about the WUS, received by second radio entity 220. For instance, terminal device 110 may be configured to provide, by first radio entity 210 to second radio entity 220, information indicating when second radio entity 220 is to inform first radio entity 210 about the WUS received at second radio entity 220. Providing may refer to some hardware and software implementation in terminal device 110, some communication links between first radio entity 210 and second radio entity 220, how information is provided, e.g., bit streams sent directly through link, or through processor, stored in memory, retrieved by first radio entity 210 or second radio entity 220, etc. In some example embodiments, first radio entity 210 may transmit said information to second radio entity 220, e.g., over interface 215 illustrated in FIG. 2.

In some example embodiments, said information may indicate when the WUS, received by second radio entity 220, is addressing terminal device 110. For instance, second radio entity 220 may receive the WUS and then determine, based on said information, whether to wake up first radio entity 210. If the WUS is addressing terminal device 110, second radio entity 220 may determine to wake up first radio entity 210 and transmit the indication to wake up first radio entity 210 responsive to said determination. However, if the WUS is addressing some other terminal device, not terminal device 110, second radio entity 220 may determine not to wake up first radio entity 210 and refrain from transmitting the indication to wake up first radio entity 210 responsive to said determination.

In some example embodiments, the WUS may address terminal device 110 in case the WUS comprises a certain terminal device Identity, ID, like a UE ID, or terminal device group ID, like a UE group ID, to which terminal device 110 belongs to. That is, said information may comprise a UE ID or a UE group ID to which terminal device 110 is associated with. Alternatively, the WUS may be addressed to all terminal device, e.g., in case of system information update. If system information is updated, the network, like wireless network node 120, may indicate system information update using a WUS which triggers terminal device 110 to initiate paging monitoring and/or acquisition of the changed system information.

In some example embodiments, the WUS may address terminal device 110 in case the WUS is received in a certain occasion, like a WUS occasion. For instance, wireless network node 120 may address the WUS to terminal device 110 by transmitting the WUS at a certain time and/or in a certain frequency domain. That is, said information may comprise the occasion indicating the WUS to be received at second radio entity 220. In some example embodiments, the occasion may refer to an occasion during which the WUS to be received is transmitted. Terminal device 110 or group of terminal devices may be allocated with a WUS occasion and in case the WUS is received terminal device 110 is addressed.

In some example embodiments, the WUS may address terminal device 110 in case the WUS is received preceding, or associated with, a Paging Occasion, PO, of terminal device 110. That is, the occasion may be preceded, or associated with, a PO of terminal device 110. For instance, wireless network node 120 may address the WUS to terminal device 110 by transmitting the WUS preceding, or associated with, a PO of terminal device 110.

In some example embodiments, if the WUS addressing terminal device 110 is received by terminal device 110, i.e., second radio entity 220 of terminal device 110, second radio entity 220 may inform first radio entity 210 accordingly and activate first radio entity 210 by transmitting the indication. Thus, first radio entity 210 may be activated and first radio entity 210 may start monitoring paging or paging DCI or WUS or PEI or the downlink control channel, like PDCCH, responsive to receiving the indication.

In some example embodiments, if the WUS is not addressing terminal device 110, second radio entity 220 may not indicate anything to first radio entity 210. That is, second radio entity 220 may refrain from transmitting the indication to first radio entity 210 if the WUS is not addressed to terminal device 110. In such a case, second radio entity 220 may continue monitoring for another WUS while first radio entity 210 may continue in the power-saving state.

In some example embodiments, the WUS configuration, i.e., the configuration for receiving a WUS from wireless network node 120, may be provided by first radio entity 210 to second radio entity 220 when at least one WUS condition is met. The at least one WUS condition may be related to for example at least one of mobility, signal strength (e.g., Reference Signal Received Power, RSRP, quality (e.g., Reference Signal Received Quality, RSRQ, or cell support for WUS. In such a case, second radio entity 220 may be activated for monitoring the WUS while first radio entity 210 may be transited to the power-saving state. That is, responsive to determining that the at least one WUS condition is met, second radio entity 220 may start monitoring for the WUS and first radio entity 210 may be allowed not to monitor for paging or PDCCH.

In some example embodiments, first radio entity 210 may signal to second radio entity 220 at least one condition for WUS monitoring and indicating the received WUS to first radio entity 210. For instance, one example condition may be related to a signal strength and/or quality of a WUS received by second radio entity 220. That is, in case WUS signal strength and/or quality goes below threshold, second radio entity 220 may stop WUS monitoring and activate first radio entity 210. Activation of first radio entity 210 may comprise informing first radio entity 210 to start monitoring the downlink control channel (e.g., PDCCH). Another example condition may be related to success rate of WUS reception, e.g., in case WUS reception fails certain amount of times or in case WUS has not been received for certain amount of time and/or certain number of WUS occasions. In such a case, second radio entity 220 may stop WUS monitoring and activate first radio entity 210.

In some example embodiments, terminal device 110 may interact, between first radio entity 210 and second radio entity 220, via at least one of Physical, PHY, Medium Access Control, MAC, or Radio Resource Control, RRC, layer of terminal device 110 or first radio entity 210. That is, first radio entity 210 and second radio entity 220 may interact via PHY, MAC or RRC signalling. In general, interaction may refer to communicating.

In some example embodiments, terminal device 110 may interact, between first radio entity 210 and second radio entity 220, via at least one of PHY, MAC or RRC of second radio entity 220 without specifying layer information on second radio entity 220. Alternatively, terminal device 110 may interact, between first radio entity 210 and second radio entity 220, via lower layers or higher layers of terminal device 110 or first radio entity 210. In one example, the PHY, MAC, or RRC of first radio entity 210 may interact with second radio entity while second radio entity 220 might not specify layers. That is, PHY, MAC, or RRC of first radio entity 210 may interact with second radio entity 220, i.e., second radio entity 220 may not be a part of any of these layers.

In some example embodiments, the interactions may be performed when terminal device 110 is in one of IDLE mode, INACTIVE mode, or CONNECTED mode.

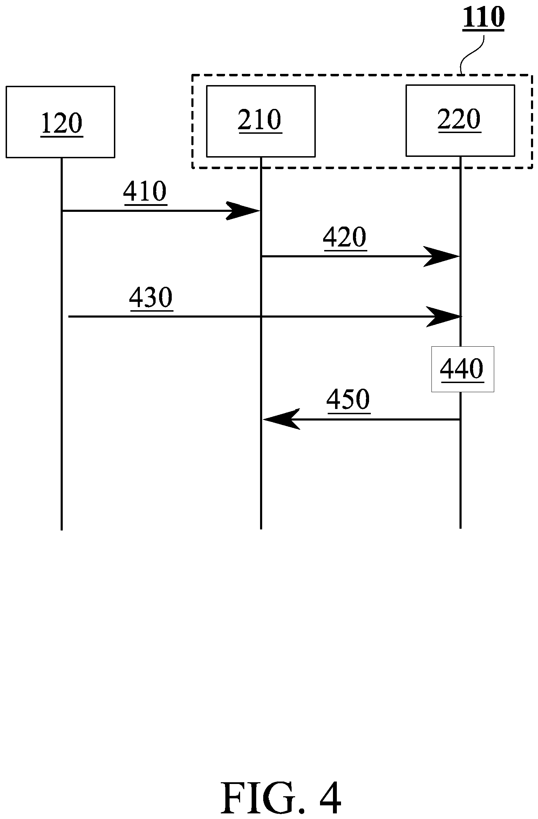

FIG. 4 illustrates a signaling graph in accordance with at least some example embodiments. On the vertical axes are disposed, from the left to the right, wireless network node 120 and terminal device 110 of FIG. 1, along with first radio entity 210 and second radio entity 220 of terminal device 110. Time advances from the top towards the bottom.

At step 410, wireless network node 120 may transmit a configuration for a WUS to terminal device 110. The configuration may be received by first radio entity 210 of terminal device 110. At step 420, first radio entity 210 may further transmit the configuration to second radio entity 220. Terminal device 110 may thus obtain the configuration for the WUS from wireless network node 120 via first radio entity 210. First radio entity 210 may also transmit, to second radio entity 220 information indicating when second radio entity 220 shall inform first radio entity 210 about a received WUS, like information indicating when a WUS is addressing terminal device 110.

At step 430, wireless network node 120 may transmit the WUS to terminal device 110. First radio entity 210 may be in the sleep state, but second radio entity 220 may monitor the WUS based on the configuration. Second radio entity 220 may thus receive the WUS from wireless network node 120. At step 440, second radio entity 220 may determine, based on said information and the received WUS, whether to activate first radio entity 210. For instance, second radio entity 220 may determine whether the received WUS is addressing terminal device 110.

Responsive to determining that the received WUS addresses terminal device 110, second radio entity 220 may, at step 450, transmit an indication to first radio entity 210, to activate first radio entity 210. Responsive to receiving the indication, first radio entity 210 may activate itself and start monitoring a downlink control channel, like a PDCCH. Terminal device 110 may hence activate first radio entity based on the indication from second radio entity 220. However, if second radio entity 220 determines that the received WUS is not addressed to terminal device 110, second radio entity 220 may refrain from transmitting the indication, i.e., skip step 450.

Example embodiments therefore make it possible to avoid waking up first radio entity 210 unnecessarily, thereby reducing power consumption of terminal device 110, like battery saving of a UE.

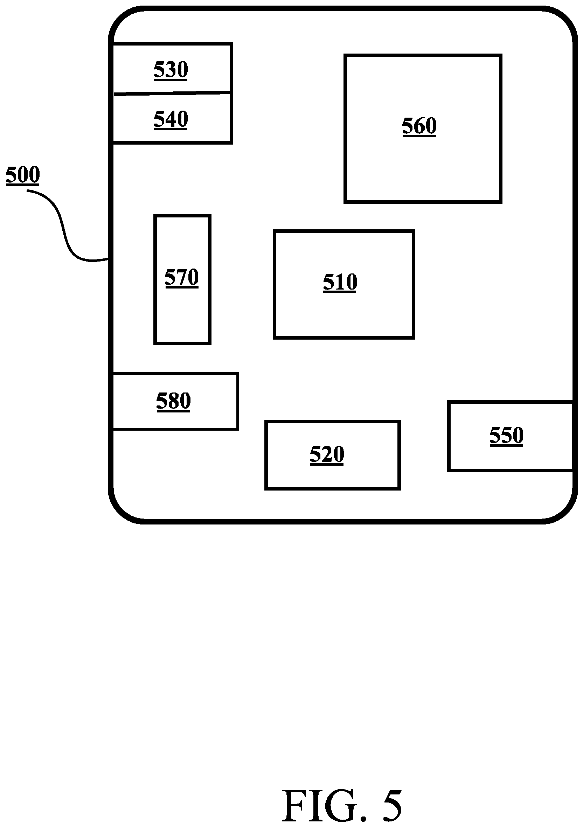

FIG. 5 illustrates an example apparatus capable of supporting at least some example embodiments. Illustrated is device 500, which may comprise, for example, terminal device 110 or wireless network node 120, or a control device configured to control the functioning thereof, possibly when installed therein. Comprised in device 500 is processor 510, which may comprise, for example, a single- or multi-core processor wherein a single-core processor comprises one processing core and a multi-core processor comprises more than one processing core. Processor 510 may comprise, in general, a control device. Processor 510 may comprise more than one processor. Processor 510 may be a control device. A processing core may comprise, for example, a Cortex-A8 processing core manufactured by ARM Holdings or a Steamroller processing core produced by Advanced Micro Devices Corporation. Processor 510 may comprise at least one Qualcomm Snapdragon and/or Intel Atom processor. Processor 510 may comprise at least one application-specific integrated circuit, ASIC. Processor 510 may comprise at least one field-programmable gate array, FPGA. Processor 510 may be means for performing method steps in device 500. Processor 510 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 500 may comprise memory 520. Memory 520 may comprise random-access memory and/or permanent memory. Memory 520 may comprise at least one RAM chip. Memory 520 may comprise solid-state, magnetic, optical and/or holographic memory, for example. Memory 520 may be at least in part accessible to processor 510. Memory 520 may be at least in part comprised in processor 510. Memory 520 may be means for storing information. Memory 520 may comprise computer instructions that processor 510 is configured to execute. When computer instructions configured to cause processor 510 to perform certain actions are stored in memory 520, and device 500 overall is configured to run under the direction of processor 510 using computer instructions from memory 520, processor 510 and/or its at least one processing core may be considered to be configured to perform said certain actions. Memory 520 may be at least in part comprised in processor 510. Memory 520 may be at least in part external to device 500 but accessible to device 500.

Device 500 may comprise a transmitter 530. Device 500 may comprise a receiver 540. Transmitter 530 and receiver 540 may be configured to transmit and receive, respectively, information in accordance with at least one cellular or non-cellular standard. Transmitter 530 may comprise more than one transmitter. Receiver 540 may comprise more than one receiver. Transmitter 530 and/or receiver 540 may be configured to operate in accordance with Global System for Mobile communication, GSM, Wideband Code Division Multiple Access, WCDMA, Long Term Evolution, LTE, and/or 5G/NR standards, for example.

Device 500 may comprise a Near-Field Communication, NFC, transceiver 550. NFC transceiver 550 may support at least one NFC technology, such as Bluetooth, Wibree or similar technologies.

Device 500 may comprise User Interface, UI, 560. UI 560 may comprise at least one of a display, a keyboard, a touchscreen, a vibrator arranged to signal to a user by causing device 500 to vibrate, a speaker and a microphone. A user may be able to operate device 500 via UI 560, for example to accept incoming telephone calls, to originate telephone calls or video calls, to browse the Internet, to manage digital files stored in memory 520 or on a cloud accessible via transmitter 530 and receiver 540, or via NFC transceiver 550, and/or to play games.

Device 500 may comprise or be arranged to accept a user identity module 570. User identity module 570 may comprise, for example, a Subscriber Identity Module, SIM, card installable in device 500. A user identity module 570 may comprise information identifying a subscription of a user of device 500. A user identity module 570 may comprise cryptographic information usable to verify the identity of a user of device 500 and/or to facilitate encryption of communicated information and billing of the user of device 500 for communication effected via device 500.

Processor 510 may be furnished with a transmitter arranged to output information from processor 510, via electrical leads internal to device 500, to other devices comprised in device 500. Such a transmitter may comprise a serial bus transmitter arranged to, for example, output information via at least one electrical lead to memory 520 for storage therein. Alternatively to a serial bus, the transmitter may comprise a parallel bus transmitter. Likewise processor 510 may comprise a receiver arranged to receive information in processor 510, via electrical leads internal to device 500, from other devices comprised in device 500. Such a receiver may comprise a serial bus receiver arranged to, for example, receive information via at least one electrical lead from receiver 540 for processing in processor 510. Alternatively to a serial bus, the receiver may comprise a parallel bus receiver.

Device 500 may comprise further devices not illustrated in FIG. 5. For example, where device 500 comprises a smartphone, it may comprise at least one digital camera. Some devices 500 may comprise a back-facing camera and a front-facing camera, wherein the back-facing camera may be intended for digital photography and the front-facing camera for video telephony. Device 500 may comprise a fingerprint sensor arranged to authenticate, at least in part, a user of device 500. In some example embodiments, device 500 lacks at least one device described above. For example, some devices 500 may lack a NFC transceiver 550 and/or user identity module 570.

Processor 510, memory 520, transmitter 530, receiver 540, NFC transceiver 550, UI 560 and/or user identity module 570 may be interconnected by electrical leads internal to device 500 in a multitude of different ways. For example, each of the aforementioned devices may be separately connected to a master bus internal to device 500, to allow for the devices to exchange information. However, as the skilled person will appreciate, this is only one example and depending on the example embodiment, various ways of interconnecting at least two of the aforementioned devices may be selected without departing from the scope of the example embodiments.

In some example embodiments, device 500 may comprise receiver 580, like a WUR. Transmitter 530 and receiver 540 may form a transceiver, like an NR transceiver, for communicating while receiver 580 may be for receiving, not for transmitting. The transceiver formed by transmitter 530 and receiver 540 may be referred to as first radio entity 210 and receiver 580 may be referred to as second radio entity 220.

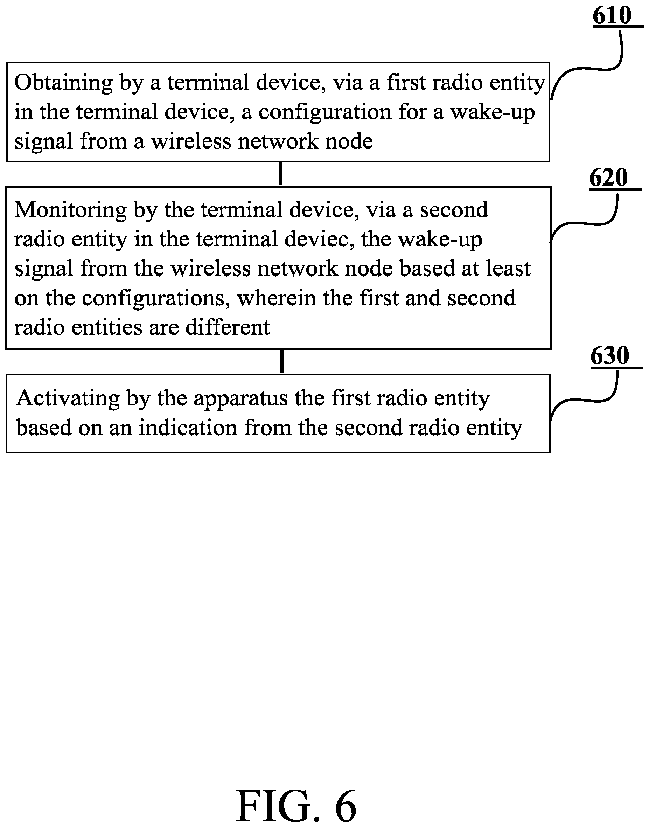

FIG. 6 is a flow graph of a method in accordance with at least some example embodiments. The steps of the method may be performed by terminal device 110 or by a control device configured to control the functioning thereof, possibly when installed therein.

The method may comprise, at step 610, obtaining by a terminal device, via a first radio entity in the terminal device, a configuration for a wake-up signal from a wireless network node. The method may also comprise, at step 620, monitoring by the terminal device, via a second radio entity in the terminal device, the wake-up signal from the wireless network node based at least on the configuration, wherein the first and second radio entities are different. Finally, the method may comprise, at step 630, and activating by the apparatus the first radio entity based on an indication from the second radio entity.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, terminal device 110 or wireless network node 120, may comprise means for carrying out the example embodiments described above and any combination thereof.

In an example embodiment, a computer program may be configured to cause a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, such as, for example, terminal device 110 or wireless network node 120, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the disclosure. One skilled in the relevant art will recognize, however, that the disclosure can be practiced without one or more of the specific details, or with other methods, components, materials, etc. In other instances, well-known structures, materials, or operations are not shown or described in detail to avoid obscuring aspects of the disclosure.

While the forgoing examples are illustrative of the principles of the example embodiments in one or more particular applications, it will be apparent to those of ordinary skill in the art that numerous modifications in form, usage and details of implementation can be made without the exercise of inventive faculty, and without departing from the principles and concepts of the disclosure. Accordingly, it is not intended that the disclosure be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some example embodiments find industrial application in wireless communication networks, for example in 3GPP networks or WLANs, wherein WUSs and WURs are used.

### ACRONYMS LIST

- 3GPP: 3rd Generation Partnership Project
- BS: Base Station
- DU: Distributed Unit
- eDRX: extended Discontinous Reception
- GSM: Global System for Mobile communication
- IAB: Integrated Access and Backhaul
- IEEE: Institute of Electrical and Electronics Engineers
- IoT: Internet of Things
- LTE: Long-Term Evolution
- M2M: Machine-to-Machine
- MAC: Medium Access Control
- MT: Mobile Termination
- NFC: Near-Field Communication
- NR: New Radio
- OOK: On-Off Keying
- PDCCH: Physical Downlink Control Channel
- PHY: Physical
- PO: Paging Occasion
- RAT: Radio Access Technology
- RRC: Radio Resource Control
- RSRP: Reference Signal Received Power
- RSRQ: Reference Signal Received Quality
- TRP: Transmission and Reception Point
- UE: User Equipment
- UI: User Interface
- WCDMA: Wideband Code Division Multiple Access
- WiMAX: Worldwide Interoperability for Microwave Access
- WLAN: Wireless Local Area Network
- WUR: Wake Up Receiver
- WUS: Wake Up Signal

**REFERENCE SIGNS LIST**

| | |
|---|---|
| 110 | Terminal device |
| 115, 125, 135, 215 | Interfaces |
| 120 | Wireless network node |
| 130 | Core network |
| 210 | First radio entity (e.g., Main Radio) |
| 220 | Second radio entity (e.g., WUR) |
| 310 | Receive antenna |
| 320 | Band-pass filter |
| 330 | Low-noise amplifier |
| 340 | Envelope detector |
| 350 | Integrator |
| 360 | Comparator |
| 370 | Correlator |
| 380 | Signal |
| 410 - 450 | Steps in FIG. 4 |
| 500 - 580 | Structure of the apparatus of FIG. 5 |
| 610-630 | Phases of the method in FIG. 6 |

## Claims

1. A terminal device, comprising:
means for obtaining, via a first radio entity in the terminal device, a configuration for a wake-up signal from a wireless network node;
means for monitoring, via a second radio entity in the terminal device, the wake-up signal from the wireless network node based at least on the configuration, wherein the first and second radio entities are different; and
means for activating the first radio entity based on an indication from the second radio entity.

2. The terminal device according to claim 1, wherein the first radio entity is a main radio of the terminal device for communicating with the wireless network node and the second radio entity is a radio receiver for receiving the wake-up signal from the wireless network node.

3. The terminal device according to claim 1 or claim 2, further comprising:
means for monitoring, by the first radio entity, a downlink control channel from the wireless network node based on the indication.

4. The terminal device according to any of the preceding claims, further comprising:
means for transiting the first radio entity to a non-power-saving state based on the indication.

5. The terminal device according to any of the preceding claims, further comprising:
means for turning on or off the first radio entity based on the indication.

6. The terminal device according to any of the preceding claims, further comprising:
means for acquiring, by the first radio entity, the indication from the second radio entity.

7. The terminal device according to any of the preceding claims, wherein the indication is based on the wake-up signal monitored at the second radio entity.

8. The terminal device according to any of the preceding claims, further comprising:
means for providing, by the first radio entity to the second radio entity, information indicating when the second radio entity is to inform the first radio entity about the wake-up signal received at the second radio entity.

9. The terminal device according to claim 8, wherein the information indicates when the wake-up signal is addressing the terminal device.

10. The terminal device according to claim 8 or claim 9, wherein the information comprises an identification of the terminal device or an identification of a group which the terminal device is associated with.

11. The terminal device of any of claims 8-10, wherein the information comprises information about an occasion indicating the wake-up signal to be received at the second radio entity.

12. The terminal device of any of claims 8-11, wherein the occasion is preceded or associated with a paging occasion of the terminal device.

13. The terminal device according to any of the preceding claims, further comprising:
means for activating the first radio entity when the terminal device determines at least one of:
∘ a signal strength or quality of the wake-up signal is below a threshold;
∘ a rate of wake-up signal reception is below a threshold;
∘ the wake-up signal is not received after a certain number of occasions;
∘ the wake-up signal is not received for a certain amount of time;
∘ the terminal device performs handover; or
∘ the terminal device receives an indication indicating that the network does not support wake-up signalling.

14. The terminal device according to any of the preceding claims, further comprising:
means for communicating, between the first radio entity and the second radio entity, via at least one of physical, medium access control or radio resource control layer of the terminal device or of the first radio entity.

15. A method, comprising:
obtaining, via a first radio entity in a terminal device, a configuration for a wake-up signal from a wireless network node;
monitoring, via a second radio entity in the terminal device, the wake-up signal from the wireless network node based at least on the configuration, wherein the first and second radio entities are different; and
activating the first radio entity based on an indication from the second radio entity.
